Europäisches Patentamt

(19) European Patent Office

Office européen des brevets

(11) Veröffentlichungsnummer: **0 075 777**
**A1**

(12) **EUROPÄISCHE PATENTANMELDUNG**

(21) Anmeldenummer: 82108441.5

(22) Anmeldetag: 13.09.82

(51) Int. Cl.³: **H 02 K 7/116**
**E 05 F 15/16**

(30) Priorität: 25.09.81 DE 8128186 U

(43) Veröffentlichungstag der Anmeldung:
06.04.83 Patentblatt 83/14

(84) Benannte Vertragsstaaten:
AT BE CH DE FR GB IT LI NL SE

(71) Anmelder: SIEMENS AKTIENGESELLSCHAFT
Berlin und München Wittelsbacherplatz 2
D-8000 München 2(DE)

(72) Erfinder: Adam, Peter
Allerseeweg 25
D-8706 Höchberg(DE)

(72) Erfinder: Ihle, Olai
Thoma-Rieder-Strasse 10
D-8702 Margetshöchheim(DE)

(54) Getriebemotor, insbesondere elektromotorischer Fensterheber-Antrieb für Kraftfahrzeuge.

(57) Um bei einem Kfz-Fensterheber-Antrieb einerseits das Motorgehäuse (3) des mit einem Getriebe gekoppelten Elektromotors auf einfache Weise herstellen und trotzdem dieses Motorgehäuse (3) mit seiner einen Stirnseite (31) montagetechnisch einfach und sicher an eine flanschartige Anlagefläche (41) eines Getriebegehäuses (4) anbauen zu können, wird neuerungsgemäß vorgeschlagen, daß das Motorgehäuse (3) aus einem gerollten Stanz-Biegeteil besteht und in der Nähe seiner einen Stirnseite (31) mit zumindest zwei am Umfang verteilt eingestanzten schlitzförmigen Öffnungen (33, 34) versehen ist, in die Blechlaschen (5, 6) jeweils mit ihrem einen Ende (51, 61) einsteckbar und mit ihrem anderen, im wesentlichen radial aus den schlitzförmigen Öffnungen (33, 34) herausragenden Ende (52, 62) im Sinne einer axialen Festspannung des Motorgehäuses (3) gegen die Anlagefläche (41) des Getriebegehäuses (4) in dieses einschraubbar (Schrauben 7, 8) sind.

Eine Anwendung eignet sich insbesondere für elektromotorische Fensterheber-Antriebe in Türen von Kraftfahrzeugen.

FIG 2

FIG 1

SIEMENS AKTIENGESELLSCHAFT    Unser Zeichen
Berlin und München    VPA 81 P 3 1 57 E

0075777

Getriebemotor, insbesondere elektromotorischer Fenster-
heber-Antrieb für Kraftfahrzeuge

Die Erfindung bezieht sich auf einen Getriebemotor, insbesondere einen elektromotorischen Fensterheber-Antrieb
für Kraftfahrzeuge mit einem gegen eine, insbesondere
flanschartige, Anlagefläche eines Getriebegehäuses mit
seiner einen Stirnseite befestigbaren Elektromotor mit
Motorgehäuse; ein derartiger Fensterheber-Antrieb ist aus
der DE-OS 27 29 398, Seite 1, 2. Absatz bekannt.

Um bei derartigen Getriebemotoren den Elektromotor über
sein Motorgehäuse mit dem Getriebegehäuse sicher verbinden zu können, ist bekannterweise auch an dem Motorgehäuse ein der flanschartigen Anlagefläche des Getriebegehäuses entsprechender Flansch vorzusehen, der auf
fertigungstechnisch aufwendige Weise entweder an das
Motorgehäuse in Form eines Winkels angeschweißt oder bei
Herstellung des Motorgehäuses als kompliziertes Guß- oder
Tiefziehteil einstückig mitanzuformen sind.

Aufgabe der vorliegenden Erfindung ist es, das Motorgehäuse
des Elektromotors aufwandsärmer herzustellen und trotzdem auf fertigungs- und montagetechnisch einfache Weise
eine sichere mechanische Verbindung zwischen Motorgehäuse einerseits und anzubauendem Getriebegehäuse andererseits erzielen zu können.

Diese Aufgabe wird bei einem Getriebemotor der eingangs
genannten Art erfindungsgemäß  dadurch gelöst, daß das
Motorgehäuse des Elektromotors aus einem gerollten Stanz-
Biegeteil besteht und in der Nähe seiner einen Stirnseite
mit zumindest zwei am Umfang verteilt eingestantzen

Bk 2 Bih / 23.09.1981

schlitzförmigen Öffnungen versehen ist, in die Blechlaschen jeweils mit ihrem einen Ende einsteckbar und mit
ihrem anderen, im wesentlichen radial aus den schlitzförmigen Öffnungen herausragenden Ende im Sinne einer
axialen Festspannung des Motorgehäuses gegen die Anlagefläche des Getriebegehäuses in dieses einschraubbar
sind.

Obwohl bei dem erfindungsgemäßen Getriebemotor das Motorgehäuse in einem einfachen Fertigungsvorgang, z.B. auf
einem Automaten, aus einem ebenen Stanzblechteil, in dem
zuvor u.a. die schlitzförmigen Öffnungen auf einfache
Weise einstanzbar sind, gerollt wird und somit an seiner
stirnseitigen Anlage am Getriebegehäuse an sich keine
flanschartigen Anlageflächen aufweist, ist trotzdem in
fertigungs- und montagetechnisch aufwandsarmer Weise
eine sichere Verbindung zwischen Motorgehäuse und Getriebegehäuse mittels der in die schlitzförmigen Öffnungen mit ihrem einen Ende einsteck- und mit ihrem
anderen Ende gegen das Getriebegehäuse festschraubbaren
und dabei das Motorgehäuse gegen das Getriebegehäuse
festspannbaren Blechlaschen möglich.

Zur weiteren Montagevereinfachung und zusätzlichen Lagesicherung, insbesondere bei stärkeren Beanspruchungen
der Verbindung zwischen Motorgehäuse und Getriebegehäuse,
ist nach einer Ausgestaltung der Erfindung vorgesehen,
daß die Anlagefläche des Getriebegehäuses mit Zentriermitteln in Form von Anschlägen zur radialen Lagesicherung des Motorgehäuses relativ zum Getriebegehäuse versehen ist. Als Anlagefläche kann beispielsweise ein an
das Getriebegehäuse angeformter Zentrierbund vorgesehen
sein, dessen Außenmaße den Innenmaßen des auf dem Zentrierbund mit seinem einen stirnseitigen Ende aufsteckbaren Motorgehäuses entsprechen. Nach einer besonderen,
gleichzeitig auf einfache Weise eine Dichtung zwischen Motorgehäuse und Getriebegehäuse ermöglichenden Ausgestaltung der Erfindung ist vorgesehen, daß die Anlagefläche des Getriebegehäuses mit gegen das festspannbare Motorgehäuse gerichteten, stirnseitig offenen und in ihrer radialen Öffnungsweite der stirnseitigen Wandstärke des Motorgehäuses entsprechenden Führungsnuten versehen ist, in die die Stirnseite des Gehäuses des Elektromotors einsteckbar und beim Einschrauben axial geführt bewegbar ist, wobei zweckmäßigerweise eine umlaufende, d.h. den gesamten stirnseitigen Rand des anliegenden Motorgehäuses umgreifende Führungsnut vorgesehen ist, in die zuvor ein Dichtungsring eingelegt ist.

Die Erfindung sowie weitere vorteilhafte Ausgestaltungen werden im folgenden anhand eines schematisch dargestellten Ausführungsbeispiels in der Zeichnung näher erläutert. Darin zeigen:

Fig. 1 einen Längsschnitt einer aus Elektromotor und angeblocktem Getriebe bestehenden Antriebseinheit eines Getriebemotors für einen elektromotorischen Kfz-Fensterheber,

Fig. 2 in einem Detailausschnitt die Befestigung zwischen Motorgehäuse und Getriebegehäuse des Fensterhebers gemäß Fig. 1 vor dem Festziehen der Befestigungsschrauben,

Fig. 3 eine axiale Draufsicht auf das Motorgehäuse des Elektromotors gemäß Fig. 1,

Fig. 4 eine stirnseitige Draufsicht auf das Gehäuse des Elektromotors gemäß Fig. 3.

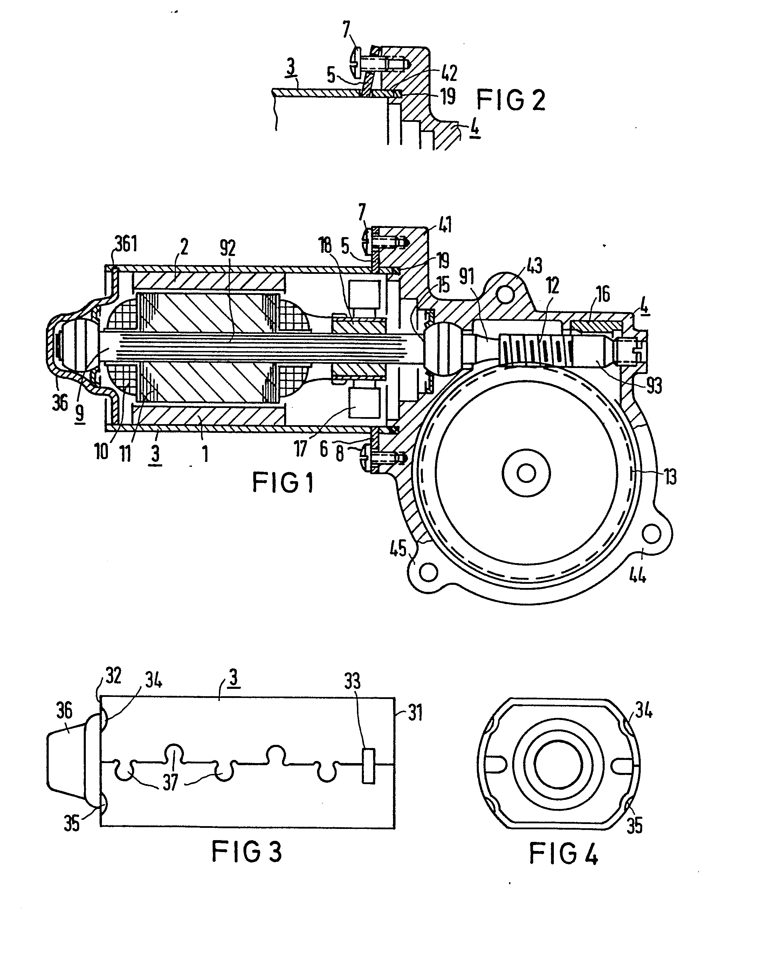

Die im Ausführungsbeispiel schematisch dargestellte Kfz-Fensterheber-Antriebseinheit besteht gemäß Fig. 1 aus einem in der linken Hälfte der Figur dargestellten elektromotorischen Antrieb und einem mit diesem gekoppelten, in der rechten Hälfte der Figur dargestellten Getriebe. Der als Gleichstrom-Permanentmagnetmotor ausgebildete Elektromotor besteht im wesentlichen aus einem Motorgehäuse 3, an dessen Innenumfangsfläche zwei teilschalenförmige Dauermagnete 1, 2 befestigt sind, und aus
einem mit seiner Welle 9 in Kalottenlagern 14, 15 gelagerten Rotor mit einem Rotorblechpaket 11 und einer
Rotorwicklung 10, die am rechten Ende des Rotors mit
einem Kommutator 18 verbunden ist, der über ein hier
nur angedeutetes Bürstensystem 17 mit einer nicht dargestellten Stromquelle verbunden ist.

Das linke Kalottenlager 14 für die Welle 9 ist in einem
Lagerschild 36 gelagert, der mit seinem äußeren Umfang
an der Innenumfangsfläche des Motorgehäuses 3 anliegt
und mit am Umfang verteilt angeordneten radialen Nasen
361 in entsprechende axiale, stirnseitig offene Ausnehmungen des Motorgehäuses 3 hineinragt und durch entsprechende Verformungen 34, 35 des Motorgehäuses 3 über
die Nasen 361 in ihrer Lage im Motorgehäuse 3 fixiert
sind. Das rechte Kalottenlager 15 ist in dem als Gußteil
hergestellten Getriebegehäuse 4 angeordnet. Die Motorwelle 9 des Rotors ist über die rechte Seite des Kalottenlagers 15 hinaus verlängert und nimmt auf dem verlängerten Wellenende 93 eine Getriebe-Schnecke 12 auf, die mit
einem Schneckenrad 13 kämmt, das in hier nicht näher
dargestellter Weise den Seilzug des Fensterheber-Antriebs
antreibt. In vorteilhafter Weise ist der Außendurchmesser
der Getriebe-Schnecke 12 kleiner als der Außendurchmesser
des übrigen Teils der Welle 9, so daß sämtliche direkt
auf der Welle 9 des Rotors zu montierenden Rotor-Bauteile, wie z.B. Isolierhülsen, Kommutator und Lager über
die Verzahnung der Getriebe-Schnecke 12 vom rechten Ende
her in montagetechnisch einfacher Weise aufschiebbar
sind. Die Welle 9 des Rotors ist an ihrer Außenfläche mit
einer Längsriffelung 92 versehen, die sich nicht nur
über den Bereich des Rotorblechpaketes 11 sondern auch
den des Kommutators 18 erstreckt. Beim Aufdrücken des
Kommutators 18 auf die Welle 9 drückt sich die Längsriffelung 92 in das Kommutatormaterial ein und erzeugt in vorteilhafter Weise mit einfachen Mitteln einen sicheren formschlüssigen Sitz zwischen Kommutator 18 und Welle 9.

Um beim Betrieb die Durchbiegung des Wellenendes 93 der verlängerten Welle 9 des Rotors möglichst gering zu halten und somit die Welle 9 gegen Bruch zu sichern, ist ein zusätzliches Stützlager 16 vorgesehen, gegen das sich das unter Last befindliche verlängerte Wellenende 93 der Welle 9 anlegen und abstützen kann. Zusätzlich ist in vorteilhafter Weise bei Dauerbruchgefahr in der Welle 9 eine Entlastungskerbe 91 zwischen dem linken Kalottenlager 15 und der Getriebe-Schnecke 12 vorgesehen.

Wie insbesondere aus Fig. 3 ersichtlich, besteht das Motorgehäuse 3 des Elektromotors aus einem gerollten Stanz-Biegeteil, derart daß das Motorgehäuse 3 aus einer zunächst ebenen Platine, in die sämtliche Formgebungen des Gehäuses an- bzw. ausgestanzt sind, zu einem aus Fig. 4 im Querschnitt ersichtlichen geschlossenen Gehäuse gerollt werden kann. Die voneinanderstoßenden Kanten des gerollten Stanz-Biegeteils können zusätzlich durch Schwalbenschwanz-Verbindungen 37 in ihrer gegenseitigen Lage fixiert werden. Das derart geformte Motorgehäuse kann dann nach der weiteren Motorkomplettierung zur baulichen Verbindung zwischen Elektromotor und Getriebe mit seiner rechten Stirnseite 31 gegen die angeformten flanschartige Anlagefläche 41 des Getriebegehäuses 4 gebracht und, wie im folgenden näher erläutert, mit diesem über die Lappen 5, 6 und die Schrauben 7, 8 fest verbunden werden.

Zur Zentrierung bei dem Montagevorgang zwischen Elektromotor und Getriebegehäuse ist in vorteilhafter Weise eine der Stirnfläche 31 des Motorgehäuses 3 angepaßte umlaufende Führungsnut 42 in der Anlagefläche 41 des

**0075777**

Getriebegehäuses 4 vorgesehen, in die bei der Montage des Elektromotors das Motorgehäuse 3 mit seiner Stirnseite 31 zunächst einsteckbar und damit zentrierbar ist. Anschließend werden die mit ihren inneren Enden in entsprechend angepaßte schlitzförmige Öffnungen 33, 34 eingesteckten Blechlaschen 5, 6 mittels in Öffnungen an ihren anderen radial herausragenden Enden axial eingesteckter und anliegender Schrauben 7, 8 gegen die Anlagefläche 41 des Getriebegehäuses 4 festgespannt. Beim Einschrauben der Schrauben 7, 8 in die Anlagefläche 41 des Getriebegehäuses 4 wird der Elektromotor 3 gegen die Anlagefläche 41 festgezogen. Dabei sind die schlitzförmigen Öffnungen 33, 34 in einem derartigen Abstand zur Stirnseite 31 des Motorgehäuses 3 angeordnet, daß immer ein genügender axialer freier Abstand zwischen der Stirnseite 31 und der Anlagefläche 41 im Getriebegehäuse 4 verbleibt und somit beim Anziehen der Schrauben 7, 8 eine Vorspannung gewährleistet ist, die das Motorgehäuse 3 an das Getriebegehäuse 4 drückt. Zur Abdichtung zwischen Motorgehäuse 3 und der Anlagefläche 41 des Getriebegehäuses 4 kann in vorteilhafter Weise zuvor ein Dichtungsring 19 in die Führungsnut 42 eingelegt werden. Zur Befestigung der gesamten Kfz-Fensterheber-Antriebseinheit in einer Kfz-Tür können am Getriebegehäuse 4 angegossene Befestigungsaugen 43, 44, 45 dienen.

4 Figuren

9 Patentansprüche

Patentansprüche

1. Getriebemotor, insbesondere elektromotorischer Fensterheber-Antrieb für Kraftfahrzeuge, mit einem gegen eine, insbesondere flanschartige, Anlagefläche eines Getriebegehäuses mit seiner einen Stirnseite befestigbaren Elek-tromotor mit Motorgehäuse, d a d u r c h g e - k e n n z e i c h n e t , daß das Motorgehäuse (3) des Elektromotors aus einem gerollten Stanz-Biegeteil besteht und in der Nähe seiner einen Stirnseite (31) mit zumindest zwei am Umfang verteilt eingestanzten schlitzförmigen Öffnungen (33, 34) versehen ist, in die Blechlaschen (5, 6) jeweils mit ihrem einen Ende (51, 61) einsteckbar und mit ihrem anderen, im wesentlichen radial aus den schlitzförmigen Öffnungen (33, 34) herausragenden Ende (52, 62) im Sinne einer axialen Festspannung des Motorgehäuses (3) gegen die Anlagefläche (41) des Getriebegehäuses (4) in dieses einschraubbar (Schrauben 7, 8) sind (Fig. 1, 2).

2. Getriebemotor nach Anspruch 1, d a d u r c h g e k e n n z e i c h n e t , daß die Anlagefläche (41) des Getriebegehäuses mit Zentriermitteln in Form von Anschlägen zur radialen Lagesicherung des Motorgehäuses (3) relativ zum Getriebegehäuse (4) versehen ist.

3. Getriebemotor nach Anspruch 1, d a d u r c h g e k e n n z e i c h n e t , daß die Anlagefläche (41) des Getriebegehäuses (4) mit Zentriermitteln für das Motorgehäuse (3) in Form eines an die Anlagefläche (41) angeformten Zentrierbundes versehen ist.

4. Getriebemotor nach Anspruch 1 oder 2, d a - d u r c h   g e k e n n z e i c h n e t , daß die Anlagefläche (41) des Getriebegehäuses (4) mit gegen das festspannbare Motorgehäuse (3) gerichteten, stirnseitig offenen und in ihrer radialen Öffnungsweite der stirnseitigen Wandstärke des Motorgehäuses (3) entsprechenden Führungsnuten versehen ist, in die die Stirnseite (31) des Gehäuses (3) des Elektromotors einsteckbar und beim Einschrauben (Schrauben 7, 8) axial geführt bewegbar ist.

5. Getriebemotor nach Anspruch 4, d a d u r c h   g e k e n n z e i c h n e t , daß die Anlagefläche (41) mit einer umlaufenden Führungsnut (42) versehen ist.

6. Getriebemotor nach einem der Ansprüche 1 bis 5, d a d u r c h   g e k e n n z e i c h n e t , daß zwischen die festspannbare eine Stirnseite (31) des Motorgehäuses (3) und die Anlagefläche (41) des Getriebegehäuses (4) ein Dichtungsring (19) zwischengelegt ist.

7. Getriebemotor nach einem der Ansprüche 1 bis 6, mit einer bis in das Getriebegehäuse verlängerten Welle des Rotors des Elektromotors und einer auf dem verlängerten Wellenende gehalterten, mit einem Schneckenrad kämmenden Antriebs-Schnecke, d a d u r c h   g e k e n n - z e i c h n e t , daß der Außendurchmesser der Verzahnung der Antriebs-Schnecke (12) kleiner ist als der Außendurchmesser des übrigen Teils der Welle (9) des Rotors.

**0075777**

8. Getriebemotor nach einem der Ansprüche 1 bis 7 mit einer bis in das Getriebegehäuse verlängerten Welle des Rotors des Elektromotors und einer auf dem verlängerten Wellenende gehalterten, mit einem Schneckenrad kämmenden Antriebs-Schnecke, d a d u r c h   g e k e n n - z e i c h n e t ,   daß das verlängerte Wellenende (93) der Welle (9) des Rotors an einem zusätzlichen Stützlager (16) abstützbar ist.

9. Getriebemotor nach einem der Ansprüche 1 bis 8 mit einem auf die Welle des Rotors des Elektromotors aufge- schobenen Kommutator, d a d u r c h   g e k e n n - z e i c h n e t ,   daß die Welle (9) des Rotors zumindest im Bereich des Kommutatorsitzes mit axialen Längsriffelungen (92) versehen ist, die sich beim Aufziehen des Kommutators (18) formschlüssig in den Kommuta- tor (18) eingraben.

0075777

1/1     81 G 3157

FIG 2

FIG 1

FIG 3

FIG 4

| | Europäisches Patentamt | **EUROPÄISCHER RECHERCHENBERICHT** | | |

# EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | H 02 K 7/116 |
| X | DE-A-2 928 576 (ROBERT BOSCH) * Seite 1, Zeilen 2-15; Seite 6, Zeilen 23-29; Seiten 7,8; Figuren 1-8 * | 1 | E 05 F 15/16 |
| | --- | | |
| Y | GB-A- 492 434 (ROBERT BOSCH) * Seite 1, Zeilen 10-77; Figur * | 1 | |
| | --- | | |
| Y | DE-A-2 261 956 (ROBERT BOSCH) * Seite 4, Zeilen 21-29; Seite 5, Zeilen 1-16; Figuren 1-3 * | 1 | |
| | --- | | |
| A | US-A-2 722 618 (DOCHTERMAN) * Spalte 2, Zeilen 42-72; Spalte 3, Zeilen 1-69; Figuren 1-11 * | 1-3 | |
| | --- | | RECHERCHIERTE SACHGEBIETE (Int. Cl. 3) |
| A | DE-A-2 300 971 (LICENTIA) * Seite 3, Zeilen 17-19; Figur 1 * | 2,3,6 | |
| | --- | | H 02 K |
| A | DE-A-2 556 240 (ROBERT BOSCH) * Figur 2 * | 4,5 | E 05 F B 60 S |
| | --- | | |
| A | DE-B-1 293 321 (LICENTIA) * Spalte 2, Zeilen 58-60; Figur 2 * | 4-6 | |
| | --- | | |
| A | FR-A-1 143 961 (ROBERT BOSCH) * Seite 1, rechte Spalte, Zeilen 16-31; Figur 2 * | 4-6 | |
| | ---     -/- | | |

Der vorliegende Recherchenbericht wurde für alle Patentansprüche erstellt.

| Recherchenort | Abschlußdatum der Recherche | Prüfer |
|---|---|---|
| DEN HAAG | 28-12-1982 | TIO K.H. |

Europäisches
Patentamt

**EUROPÄISCHER RECHERCHENBERICHT**

**0075777**
Nummer der Anmeldung

EP 82 10 8441

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 646 886 (ROBERT BOSCH)<br>* Seite 12, Zeilen 22-32; Seite 13, Zeilen 1-23; Figur 8 *<br><br>--- | 7,8 | |
| A | US-A-3 080 615 (CARLSON et al.)<br>* Spalte 2, Zeilen 68-72; Spalte 3, Zeilen 1-18; Figuren 3-5 *<br><br>----- | 9 | |

RECHERCHIERTE
SACHGEBIETE (Int. Cl. 3)

Der vorliegende Recherchenbericht wurde für alle Patentansprüche erstellt.

| Recherchenort | Abschlußdatum der Recherche | Prüfer |
|---|---|---|
| DEN HAAG | 28-12-1982 | TIO K.H. |